# EUROPÄISCHE PATENTSCHRIFT

(11) **EP 2 495 453 B1**
(45) Veröffentlichungstag und Bekanntmachung des Hinweises auf die Patenterteilung: **26.06.2019**
(21) Anmeldenummer: 12157359.6
(22) Anmeldetag: 28.02.2012
(51) Int. Cl.: F16B 5/02, B62D 25/14

(54) **Befestigungseinrichtung mit Toleranzausgleich**
Fastening device with tolerance compensation
Dispositif de fixation doté d'une égalisation de tolérance

(30) Priorität: 03.03.2011 DE 102011001052
(43) Veröffentlichungstag der Anmeldung: 05.09.2012
(73) Patentinhaber: Böllhoff Verbindungstechnik GmbH, 33649 Bielefeld (DE)
(72) Erfinder: Figge, Hans-Ulrich, 33758 Schloss Holte-Stukenbrock (DE); Kohlbrenner, Karl-Heinz, 63773 Goldbach (DE); König, Michael, 33729 Bielefeld (DE)
(74) Vertreter: Heyer, Volker

(56) Entgegenhaltungen:
- DE-U1-202005 009 017
- DE-U1-202006 012 493

## Beschreibung

### 1. Gebiet der Erfindung

Die vorliegende Erfindung betrifft eine Befestigungseinrichtung zum Befestigen eines ersten Bauteils an einem zweiten Bauteil mit selbsttätigem Ausgleich von Toleranzen zwischen diesen Bauteilen, ein Bauteil mit installierter Befestigungseinrichtung sowie ein Installationsverfahren dafür.

### 2. Hintergrund der Erfindung

Derartige Befestigungseinrichtungen mit Toleranzausgleich sind in großer Vielfalt bekannt. Sie bestehen üblicherweise aus einer Verstellbuchse mit einem sogenannten Mitschleppabschnitt, der mit einer Befestigungsschraube eine Reibschlussverbindung eingehen kann. Beim Drehen der Befestigungsschraube wird daher die Verstellbuchse mitgedreht, bis sie sich an eines der beiden voneinander beabstandet angeordneten Bauteile anlegt. Beim Weiterdrehen der Befestigungsschraube und entsprechender Erhöhung des Drehmoments wird die Reibschlussverbindung zwischen Befestigungsschraube und Mitschleppabschnitt überwunden, sodass dann die beiden Bauteile durch die Befestigungsschraube über die Verstellbuchse miteinander verspannt werden können.

EP 1 666 342 B1 beschreibt eine derartige Befestigungseinrichtung, deren Mitschleppabschnitt auf der Befestigungsschraube angeordnet ist. Im Speziellen besteht der Mitschleppabschnitt aus einem deformierten Gewindebereich, der sich nicht in das Innengewinde des Ausgleichselements einschrauben lässt. Daher wird zunächst das Ausgleichselement durch die Befestigungsschraube mitgedreht. Erst wenn sich das Ausgleichselement an einem Bauteil abstützt, kann ein blockierendes Drehmoment überwunden werden, sodass der deformierte Gewindebereich in das Gewinde des Ausgleichselements einläuft. Neben der Konstruktion des Mitschleppers ist das Toleranzausgleichselement sowohl in radialer wie auch in axialer Richtung raumgreifend aufgebaut, sodass entsprechender Bauraum bei der Installation zwischen zwei Bauteilen bereit gestellt werden muss.

EP 1 260 717 offenbart eine Befestigungseinrichtung, bei der ebenfalls die Befestigungsschraube das Ausgleichselement mitdreht. Dieses Mitdrehen wird beispielsweise dadurch erzielt, dass das Gewinde der Befestigungsschraube mit einem Reibungsmittel oder einem ähnlichen Stoff beschichtet wird, sodass ein erhöhtes Drehmoment zum Einschrauben der Befestigungsschraube in das Gewinde des Ausgleichselements erforderlich ist. Somit wird ebenfalls auf dieser Grundlage das Ausgleichselement mitgedreht, bis es am gegenüberliegenden Bauteil anliegt.

In der Befestigungsrichtung der WO 2010/066363 A1 ist ein Ausgleichselement vorgesehen, dessen Innenseite ähnlich einer Mitnehmerhülse ausgebildet ist. Diese Mitnehmerhülse aus Kunststoff stellt aufgrund ihres im Vergleich zum Außendurchmesser der Befestigungsschraube verringerten Durchmessers eine Reibschlussverbindung zur Befestigungsschraube her. Auf dieser Grundlage dreht die Befestigungsschraube das Ausgleichselement mit, bis dieses am gegenüberliegenden Bauteil anliegt. Diese Kunststoffhülse zur Mitnahme des Ausgleichselements weist ein Innengewinde auf, welches kleiner als das Außengewinde der Befestigungsschraube ausgebildet ist. Daher ist ein erhöhtes Drehmoment zum Einschrauben der Befestigungsschraube in diese Kunststoffhülse erforderlich, sodass die Befestigungsschraube zunächst das Ausgleichselement mitdreht. Auch diese Befestigungseinrichtung benötigt in radialer wie auch in axialer Richtung einen großen Bauraum, sodass sie Nachteile bei einer platzsparenden Anordnung mit sich bringt. Zudem muss die Befestigungsschraube bei der Installation vollständig die Kunststoffhülse durchlaufen, was aufgrund des erhöhten Drehmoments die Taktzeit zur Installation der Befestigungseinrichtung erhöht. Sollte die Kunststoffhülse zu kurz dimensioniert oder zu weich sein, könnte nachteilig die Befestigungsschraube durchgesteckt werden.

Aus der DE 20 2005 009 017 U1 ist eine Toleranzausgleichsanordnung zum selbsttätigen Ausgleichen von Toleranzen im Abstand zwischen zwei miteinander zu verspannenden Bauteilen bekannt. Die Toleranzausgleichsanordnung besteht aus einer Befestigungsschraube, einem Grundelement, das an einem ersten der beiden Bauteile festlegbar ist, und einer Verstellbuchse, die durch eine Verstellung relativ zum Grundelement in Anlage mit dem zweiten Bauteil für den Toleranzausgleich bewegbar ist. Das Grundelement und die Verstellbuchse bilden eine erste Gewindepaarung einer vorgegebenen Gangrichtung zum Verstellen der Verstellbuchse relativ zum Grundelement und das Grundelement und die Befestigungsschraube bilden eine zweite Gewindepaarung der entgegengesetzten Gangrichtung zum Verspannen der beiden Bauteile. Weiterhin umfasst die Toleranzausgleichsanordnung einen Mitnehmer, der als getrenntes Bauteil ausgebildet und mit der Verstellbuchse lösbar verbunden ist und der mehrere in Umfangsrichtung verteilte, elastisch nachgebende Klemmabschnitte hat, die mit dem Gewinde der Befestigungsschraube eine oberhalb eines vorgegebenen Drehmomentes lösbare Reibschlussverbindung bilden.

Basierend auf dem oben diskutierten Stand der Technik ist es die Aufgabe vorliegender Erfindung, eine Befestigungseinrichtung zum Befestigen eines Bauteils B an einem Bauteil A mit selbsttätigem Ausgleich von Toleranzen im Abstand zwischen den beiden Bauteilen bereitzustellen, die einen geringen Bauraum einnimmt und mit geringem Aufwand im Vergleich zum Stand der Technik installierbar ist.

### 3. Zusammenfassung der Erfindung

Die obige Aufgabe wird durch eine Befestigungseinrichtung zum Befestigen eines ersten Bauteils an einem zweiten Bauteil mit selbsttätigem Ausgleich von Toleranzen im Abstand zwischen dem ersten Bauteil und dem zweiten Bauteil gemäß dem unabhängigen Patentanspruch 1, durch ein Bauteil mit installierter Befestigungseinrichtung gemäß Anspruch 11 sowie durch ein Installationsverfahren für die Befestigungseinrichtung gemäß Patentanspruch 12 gelöst. Weitere Ausgestaltungen, Modifikationen und Weiterentwicklungen vorliegender Erfindung ergeben sich aus den abhängigen Ansprüchen sowie der Beschreibung in Kombination mit den Zeichnungen.

Die erfindungsgemäße Befestigungseinrichtung weist die folgenden Merkmale auf: ein Halteelement und ein Verstellelement, die über ein Außengewinde des Halteelements und ein Innengewinde des Verstellelements in einer ersten Gewindepaarung mit einer ersten Gangrichtung miteinander verschraubbar sind, wobei eine Befestigungsschraube über eine zweite Gewindepaarung einer der ersten entgegengesetzten Gangrichtung in das Halteelement einschraubbar und mit dem Verstellelement über einen Mitschlepper lösbar verbindbar ist, um beim Drehen der Befestigungsschraube das Verstellelement mitzudrehen und dadurch zwecks Toleranzausgleich in Anlage mit dem zweiten Bauteil zu bewegen, und der Mitschlepper einen in axialer Richtung des Verstellelements federnd angeordneten Ring mit einem Mitnehmergewinde und einer überwindbaren Mitnehmergewindeblockade aufweist.

Die erfindungsgemäße Befestigungseinrichtung stellt eine platzsparende Konstruktion im Vergleich zum Stand der Technik bereit, die sich durch ein leicht gängiges Installieren und effektives Ausgleichen von Toleranzen auszeichnet. Gerade die Verbindung von Halteelement und Verstellelement über ein Außengewinde des Halteelements sorgt für eine kompakte Anordnung. Die spezielle Mitschlepperkonstruktion basierend auf einem federnd angeordneten Ring mit Mitnehmergewinde und Mitnehmergewindeblockade gewährleistet ein verlässliches Mitnehmen des Verstellelements durch die Befestigungsschraube. Das Mitnehmergewinde garantiert, dass die Befestigungsschraube nicht durch den Mitschlepper hindurch gedrückt werden kann. Des Weiteren realisiert der Mitschlepper eine verlässliche Ankopplung an die Befestigungsschraube, sodass nach Einlaufen des Mitnehmergewindes in das Gewinde der Befestigungsschraube sofort eine Drehbewegung der Befestigungsschraube auf das Verstellelement zu einem effektiven Toleranzausgleich übertragen wird. Zudem sorgt die Kombination aus Mitnehmergewinde und Mitnehmergewindeblockade im Mitschlepper dafür, dass keine hohen Reibungskräfte das Eindrehen der Befestigungsschraube in den Mitschlepper erschweren und auf diese Weise die Taktzeit zur Installation der Befestigungseinrichtung verlängern.

Gemäß einer bevorzugten Ausführungsform der Befestigungseinrichtung ist die Mitnehmergewindeblockade in Kombination mit dem Mitnehmergewinde als ein Untermaßgewinde im Vergleich zum Gewinde der Befestigungsschraube ausgebildet, so dass ein Nenndurchmesser des Gewindes der Befestigungsschraube größer ist als ein Nenndurchmesser des Mitnehmergewindes. Da das Untermaßgewinde des Mitschleppers im Vergleich zum Gewinde der Befestigungsschraube mit einem geringeren Nenndurchmesser ausgebildet ist, muss ein Schwellenwert-Drehmoment zwischen Mitschlepper und Befestigungsschraube überwunden werden, um die Befestigungsschraube in den Mitschlepper einzuschrauben. Solange dieses Schwellenwert-Drehmoment nicht erreicht wird, dreht die Befestigungsschraube das Verstellelement über den Mitschlepper mit und gleicht dadurch den Abstand zwischen dem ersten und zweiten Bauteil aus. Erst wenn sich das Verstellelement am zweiten Bauteil abstützt, steigt das Drehmoment zwischen Befestigungsschraube und Mitschlepper über das Schwellenwert-Drehmoment und die Befestigungsschraube wird in das Halteelement eingeschraubt.

Gemäß einer Ausgestaltung der erfindungsgemäßen Befestigungseinrichtung weist der Mitschlepper einen Befestigungsring auf, der an dem Verstellelement befestigbar, vorzugsweise einpressbar, ist. Es ist zudem bevorzugt, dass der federnd angeordnete Ring des Mitschleppers über mindestens zwei in radialer Richtung verlaufende Stege an dem Befestigungsring angeordnet ist.

Das Mitnehmergewinde des Mitschleppers ist an das Gewinde der Befestigungsschraube angepasst. Die federnde Anordnung des Rings am Befestigungsring gewährleistet, dass der Mitschlepper und somit das Mitnehmergewinde in axialer Richtung federnd versetzbar sind, sodass sich automatisch der Mitschlepper in eine passende axiale Eindrehposition zum Eindrehen der Befestigungsschraube in das Mitnehmergewinde und/oder zum Eindrehen der Befestigungsschraube in das Innengewinde des Haltelement versetzt. Aufgrund der automatischen Abstimmung zwischen dem Gewinde der Befestigungsschraube und dem Mitnehmergewinde läuft die Befestigungsschraube in den Mitschlepper nahezu reibungslos ein. Die Mitnehmergewindeblockade des Mitschleppers sperrt ein weiteres Einschrauben der Befestigungsschraube, sodass die Drehung der Befestigungsschraube auf das Verstellelement übertragen wird. Zudem muss sich die Befestigungsschraube kein Gewinde in den Mitschlepper schneiden.

Gemäß einer weiteren bevorzugten Ausführungsform vorliegender Erfindung weist das Mitnehmergewinde maximal einen Gewindegang über einen Drehwinkel von maximal 360° auf. Es ist ebenfalls bevorzugt, das Mitnehmergewinde über einen Drehwinkel kleiner 360° auszubilden, solange eine verlässliche Mitnahme des Verstellelements durch die Befestigungsschraube gewährleistet ist. Daher werden ebenfalls Mitnehmergewinde eingesetzt, die sich über einen Drehwinkel von 0°-270°, vorzugsweise 0°-180°, erstrecken.

Gemäß einer weiteren Ausführungsform vorliegender Erfindung ist die Mitnehmergewindeblockade des Mitschleppers aus einem radial einwärts ragenden Nocken aufgebaut. Eine weitere alternative Ausgestaltung der Mitnehmergewindeblockade besteht aus einem axial verlaufenden Steg, der das Mitnehmergewinde gegen ein weiteres Eindrehen der Befestigungsschraube sperrt. Sowohl der radial einwärts ragende Nocken wie auch der axial verlaufende Steg sind radial auswärts irreversibel deformierbar oder radial auswärts versetzbar, sodass bei Überschreiten eines Drehmoment-Schwellenwerts die Mitnehmergewindeblockade mit Hilfe der Befestigungsschraube überwindbar ist, sodass die Befestigungsschraube weiter einschraubbar ist. Der Nocken oder der axial verlaufende Steg sind vorzugsweise nahe dem Ausgang des Mitnehmergewindes angeordnet.

Gemäß einer weiteren bevorzugten Ausführungsform der Befestigungseinrichtung weist das Halteelement an einer dem Mitschlepper zugewandten Stirnseite mindestens eine Rastvertiefung auf, sodass darin das Verstellelement gegen Verdrehung lösbar verriegelbar ist über einen kreisbogenförmig oder tangential verlaufenden Federarm mit Rastnase des Befestigungsrings oder eine axiale Rastnase des federnd angeordneten Rings. Mithilfe dieser Anordnung wird eine Transportsicherung der Befestigungseinrichtung bereitgestellt.

Gemäß einer weiteren Ausgestaltung vorliegender Erfindung weist das Halteelement einen Nietkragen auf, mit dem das Halteelement in einer Schiene des ersten Bauteils befestigbar ist. Gerade diese Art der Befestigung des Halteelements ermöglicht eine platzsparende Befestigung, sodass das Halteelement bündig mit dem ersten Bauteil abschließt.

Des Weiteren weist die erfindungsgemäße Befestigungseinrichtung gemäß einer der oben beschriebenen Ausgestaltungen bevorzugt die Befestigungsschraube auf.

Zudem umfasst vorliegende Erfindung ein Bauteil mit der installierten Befestigungseinrichtung gemäß einer der oben beschriebenen Alternativen.

Des weiteren umfasst vorliegende Erfindung ein Installationsverfahren einer Befestigungseinrichtung zwischen einem ersten Bauteil und einem zweiten Bauteil mit selbsttätigem Ausgleich von Toleranzen im Abstand zwischen dem ersten Bauteil und dem zweiten Bauteil, bei dem die Befestigungseinrichtung ein Halteelement, ein Verstellelement, eine Befestigungsschraube und einen Mitschlepper mit einem in axialer Richtung des Verstellelements federnd angeordneten Ring mit einem Mitnehmergewinde und einer überwindbaren Mitnehmergewindeblockade aufweist. Das Installationsverfahren umfasst die folgenden Schritte: Befestigen des Halteelements am ersten Bauteil, wobei das Verstellelement auf dem Verstellelement vormontiert ist, axiales Positionieren des federnd angeordneten Rings mit Hilfe der Befestigungsschraube, so dass die Befestigungsschraube in das Mitnehmergewinde mit überwindbarer Mitnehmergewindeblockade und/oder ein Innengewinde des Halteelements einschraubbar ist, Einschrauben der Befestigungsschraube in das Mitnehmergewinde, Drehen des Verstellelements über den Mitschlepper mit der Befestigungsschraube, bis der Abstand zwischen dem ersten Bauteil und dem zweiten Bauteil ausgeglichen ist, und Überwinden der Mitnehmergewindeblockade durch Drehen der Befestigungsschraube und Einschrauben der Befestigungsschraube in das Halteelement, so dass das erste Bauteil am zweiten Bauteil befestigt ist.

In weiterer bevorzugter Ausgestaltung des Installationsverfahrens wird beim Überwinden der Mitnehmergewindeblockade die Befestigungsschraube einen radial einwärts ragenden Nocken oder einen in axialer Richtung verlaufenden Steg radial auswärts versetzen. Es ist zudem bevorzugt, dass der radial einwärts ragende Nocken durch die Befestigungsschraube radial auswärts irreversibel verformt oder reversibel radial auswärts gedrückt wird.

### 4. Beschreibung der begleitenden Zeichnungen

Die vorliegende Erfindung wird unter Bezugnahme auf die begleitenden Zeichnungen näher erläutert.

Es zeigen:
- Figur 1: eine Schnittdarstellung einer bevorzugten Ausführungsform der erfindungsgemäßen Befestigungseinrichtung,
- Figur 2: eine perspektivische Explosionsansicht einer bevorzugten Ausführungsform der erfindungsgemäßen Befestigungseinrichtung,
- Figur 3: eine bevorzugte Ausführungsform des Halteelements und des Verstellelements der Befestigungseinrichtung aus Figur 2,

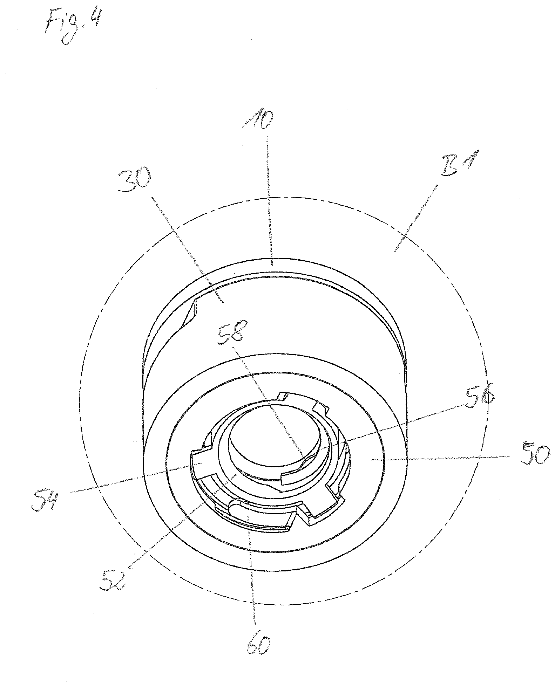

- Figur 4: das Halteelement und das Verstellelement aus Figur 3 in einem verbundenen Zustand,
- Figur 5: eine Explosionsdarstellung einer bevorzugten Ausführungsform des Verstellelements mit Mitschlepper und des Halteelements,
- Figur 6: eine axiale Draufsicht auf eine bevorzugte Ausführungsform des Mitschleppers,
- Figur 7: eine teilweise Schnittdarstellung einer bevorzugten Ausführungsform des Mitschleppers entlang der Linie B-B aus Figur 6,
- Figur 8: eine Schnittdarstellung des Mitschleppers aus Figur 6, entlang der Linie A-A,
- Figur 9: eine Schnittdarstellung einer bevorzugten Ausgestaltung des ersten Bauteils,
- Figur 10: eine teilweise Schnittdarstellung einer bevorzugten Ausführungsform der Befestigungseinrichtung in einem installierten Zustand zwischen dem ersten und zweiten Bauteil,
- Figur 11: eine bevorzugte Ausführungsform der Befestigungseinrichtung in einer weiteren Installationsposition zwischen dem ersten und zweiten Bauteil und
- Figur 12: ein Flussdiagramm einer bevorzugten Ausführungsform des Installationsverfahrens für die Befestigungseinrichtung.

### 5. Detaillierte Beschreibung der bevorzugten Ausführungsformen

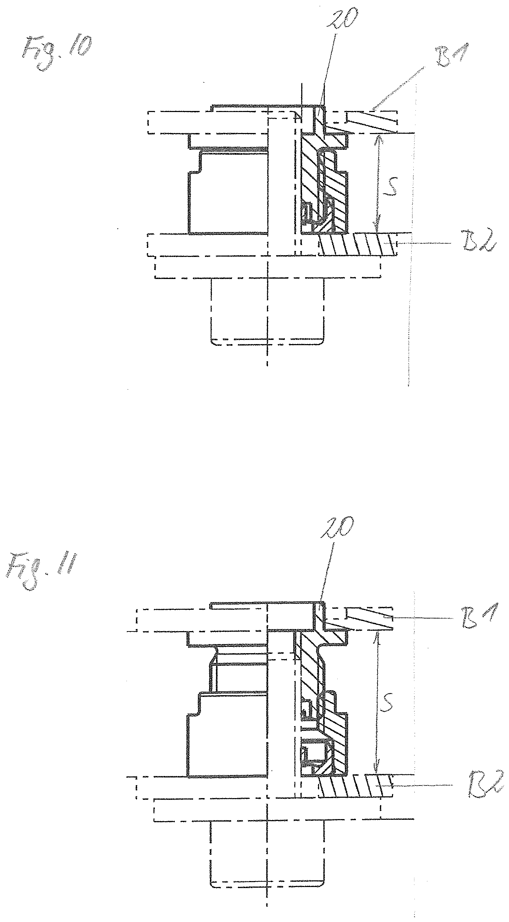

Die in den Figuren 10 und 11 dargestellte Befestigungseinrichtung dient zum Befestigen eines ersten Bauteils B1 an einem zweiten Bauteil B2. Das zweite Bauteil B2 ist beispielsweise ein Träger eines Kraftfahrzeugs, während das erste Bauteil B1 ein durch Lehren fixiertes Teil eines Scheinwerfergehäuses ist. Gemäß einer weiteren Ausgestaltung ist das erste Bauteil B1 eine Führungsschiene für ein Schiebedach, die am Fahrzeugrahmen, also am zweiten Bauteil B2, befestigt wird. Das erste Bauteil B1 und das zweite Bauteil B2 haben einen Abstand S voneinander, der aufgrund von montage- und/oder fertigungsbedingten Toleranzen variieren kann. Die dargestellte Befestigungseinrichtung ermöglicht einen selbsttätigen Ausgleich dieser Toleranzen.

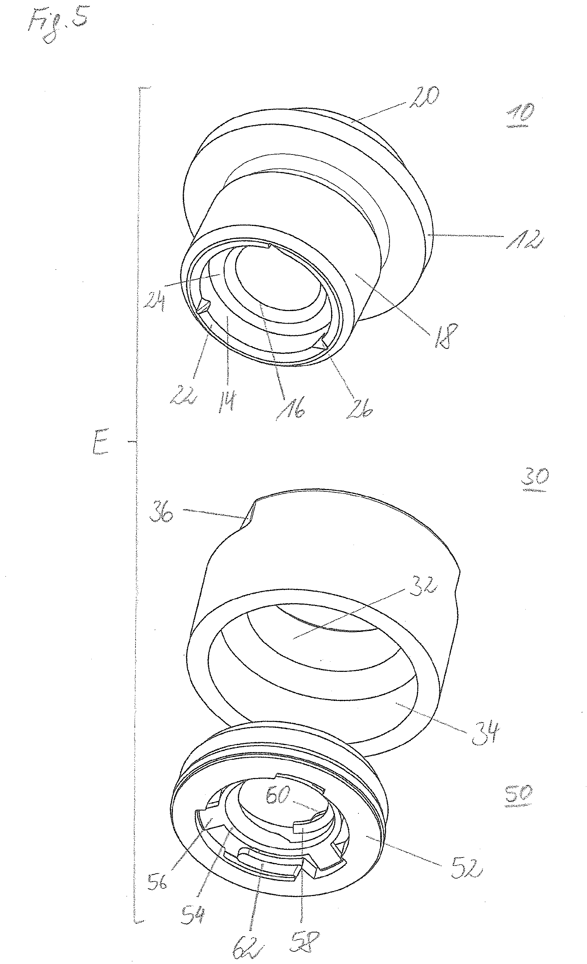

Die Befestigungseinrichtung besteht aus einem Halteelement 10, einem Verstellelement 30 und einer Befestigungsschraube 70. Das Halteelement 10 und das Verstellelement 30 bilden eine vormontierbare Baueinheit E, wie sie in einer Explosionsdarstellung in Figur 5 gezeigt ist.

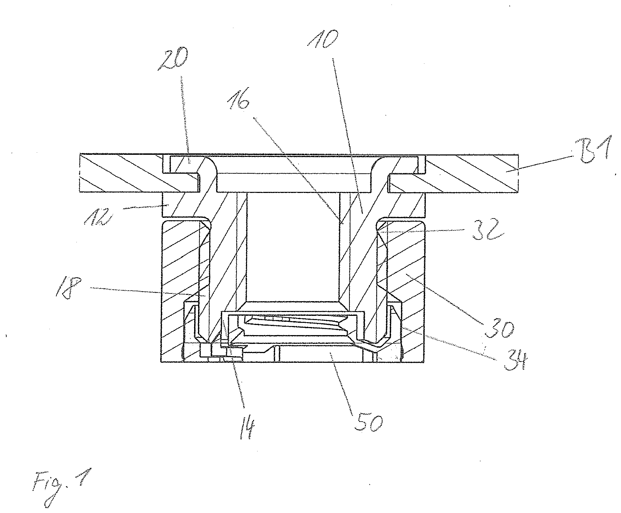

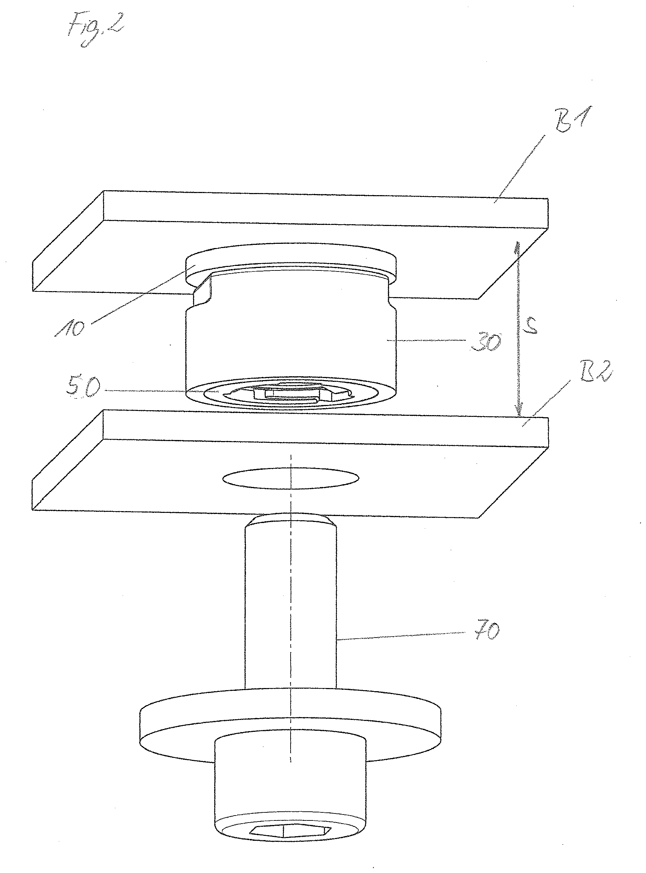

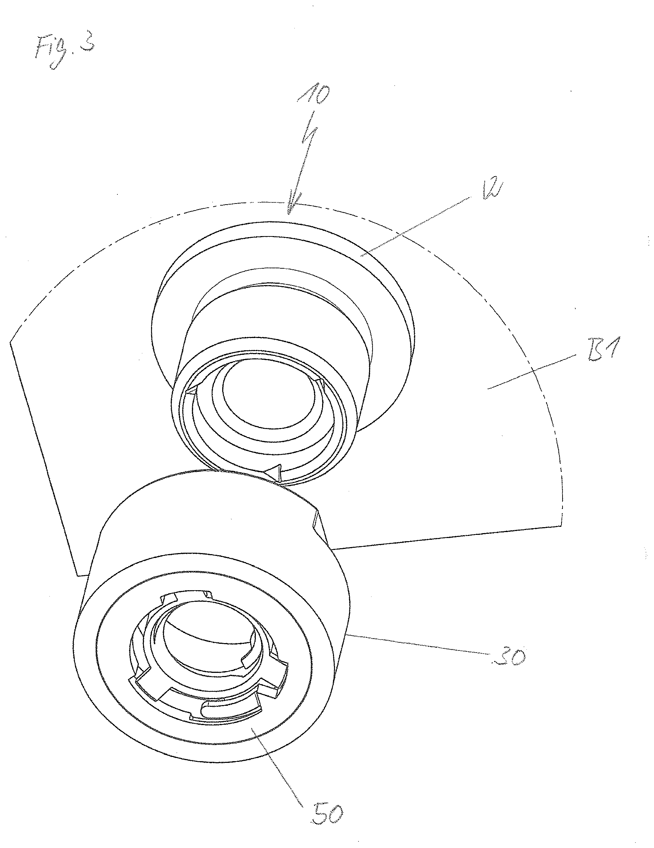

In den Figuren 1, 3 und 5 ist das Halteelement 10 im Einzelnen dargestellt. Das einstückig ausgebildete Halteelement 10 besteht aus einem hülsenförmigen Körper der an seinem einen axialen Ende in einen Flansch 12 und an seinem anderen axialen Ende in eine zylindrisch ausgebildete Ausnehmung 14 übergeht. Der hülsenförmige Körper des Halteelements 10, der sich zwischen dem Flansch 12 und der zylindrischen Aussparung 14 erstreckt, weist an seiner radialen Innenseite ein Innengewinde 16 auf, im Speziellen ein Rechtsgewinde, dass passend zum Gewinde der Befestigungsschraube 70 (vgl. Figur 2) ausgebildet ist. An der radialen Außenseite des hülsenförmigen Körpers des Halteelements 10 ist ein Außengewinde 18 vorgesehen, das passend zu einem radialen Innengewinde des Verstellelements 30 geformt ist.

Das Außengewinde 18 des Halteelements 10 und das Innengewinde 32 des Verstellelements 30 bilden eine erste Gewindepaarung mit einer ersten Gangrichtung. Das Gewinde der Befestigungsschraube 70 und das Innengewinde des Halteelements sowie des Mitschleppers 50 bilden eine zweite Gewindepaarung mit einer der ersten entgegengesetzten zweiten Gangrichtung. Diese beiden Gewindepaarungen mit entgegengesetzter Gangrichtung gewährleisten, das beim Einschrauben der Befestigungsschraube 70 in die Befestigungseinrichtung das Verstellelement 30 vom Halteelement 10 soweit abgeschraubt wird, bis der Abstand S zwischen den beiden Bauteilen B1 und B2 ausgeglichen ist.

Das Halteelement 10 besteht bevorzugt aus Metall, vorzugsweise aus Stahl oder einem anderen verlässlich umformbaren und somit befestigbarem Werkstoff. Gemäß einer bevorzugten Ausführungsform wird das Halteelement 10 am ersten Bauteil B1 mithilfe eins Nietkragens 20 befestigt. Im nicht installierten Zustand erstreckt sich der Nietkragen 20 in axialer Richtung des Halteelements 10, wie es beispielgebend in den Figuren 10 und 11 dargestellt ist. Der Nietkragen 20 lässt sich in einer Schiene des ersten Bauteils B1 oder einer Öffnung mit Ansenkung derart befestigen, dass der Nietkragen 20 bündig mit der Oberseite des ersten Bauteils B1 abschließt. Eine derartige Anordnung ist in Figur 1 exemplarisch dargestellt. Der Nietkragen 20 wird vorzugsweise mit dem Prinzip des Taumelnietens umgelegt, sodass er fest an der Schiene oder der Öffnung im ersten Bauteil B1 befestigt ist. Auf diese Weise wird das erste Bauteil B1 zwischen dem Nietkragen 20 und dem Flansch 12 des Halteelements gehalten.

Das dem Flansch 12 gegenüberliegende Ende des Halteelements 10 weist die zylindrische Ausnehmung 14 auf. Die zylindrische Ausnehmung 14 wird einerseits durch die axial außen liegende Stirnseite 22 und andererseits durch die axial innen liegende Stirnseite 24 begrenzt. Gemäß der in Figur 5 dargestellten bevorzugten Ausführungsform weist die axial außen liegende Stirnseite 22 Rastvertiefungen 26 auf. Es ist ebenfalls bevorzugt, diese Rastevertiefungen an der axial innen liegenden Stirnseite 24 oder an beiden Stirnseiten 22, 24 vorzusehen (nicht gezeigt). In die Rastvertiefungen 26 greifen vorzugsweise eine oder mehrere Rastnasen 64 des Mitschleppers 50 ein, sodass das auf das Halteelement 10 aufgeschraubte Verstellelement 30 gegen Verdrehen gehalten wird. Diese Verdrehsicherung, die nur bis zu einem bestimmten Schwellenwert eines Drehmoments dem Verdrehen widersteht, dient als Transportsicherung der vormontierten Baueinheit aus Halteelement 10 und Verstellelement 30 mit Mitschlepper 50 sowie als Kontersicherung.

Das Verstellelement 30 besteht vorzugsweise aus einem hülsenförmigen Grundkörper aus Metall, bevorzugt Stahl. Es ist ebenfalls denkbar, andere Werkstoffe, wie beispielsweise stabile Kunststoffe zu nutzen, solange diese die mechanischen Stabilitätsanforderungen an die Befestigungseinrichtung erfüllen. Das Innengewinde 32 des Verstellelements 30 ist vorzugsweise als Linksgewinde passend zum Außengewinde 18 des Halteelements 10 ausgebildet. Zudem umfasst das Verstellelement 30 an einem axialen Ende eine zylindrische Aussparung 34. In diese zylindrische Aussparung 34 ist der Mitschlepper 50 eingepresst, sodass er dort kraftschlüssig gehalten wird. Es ist ebenfalls bevorzugt, den Mitschlepper 50 in die zylindrische Aussparung 34 einzukleben oder über ein anderes geeignetes Befestigungsverfahren dort zu befestigen.

Des Weiteren umfasst das Verstellelement 30 an seiner radialen Außenseite ein Antriebsmittel 36. Dieses Antriebsmittel besteht vorzugsweise aus zwei diametral gegenüberliegend angeordneten parallelen Flächen, sodass mit einem Maulschlüssel das Verstellelement 30 verdrehbar ist. Ein derartiges Antriebsmittel 36 ist hilfreich, wenn das Verstellelement 30 aus einer installierten Position gelöst werden soll.

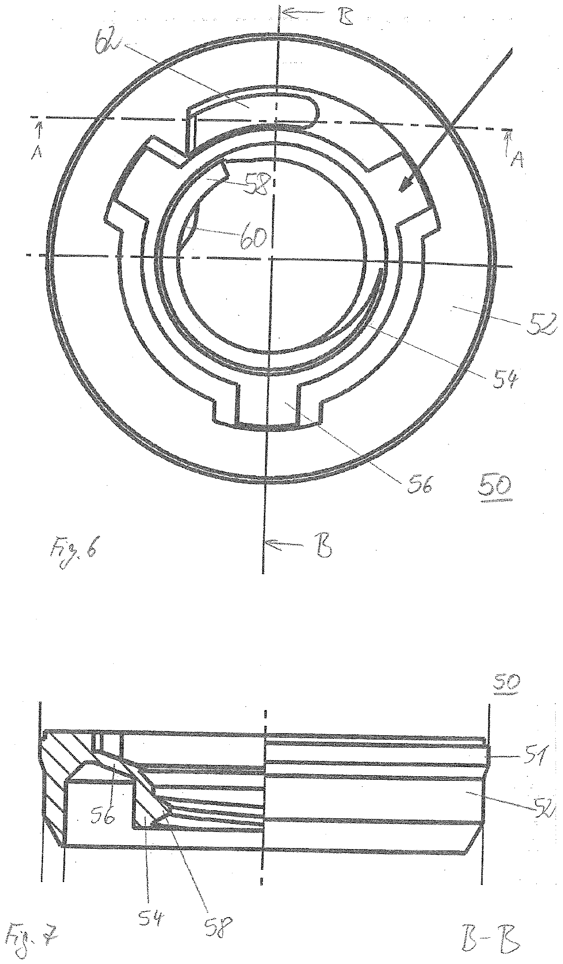

Innerhalb der zylindrischen Aussparung 34 des Verstellelements 30 ist der Mitschlepper 50 gehalten. Der Mitschlepper 50 besteht vorzugsweise aus Kunststoff, wobei ebenfalls Metall nutzbar ist, solange der Mitschlepper 50 verlässlich in der zylindrischen Aussparung 34 befestigbar ist. Der Mitschlepper 50 besteht aus einem Befestigungsring 52, wie er in den Figuren 6, 7 und 8 zu erkennen ist. Der Befestigungsring 52 hat eine axiale Ausdehnung, die an die zylindrische Aussparung 34 im Verstellelement angepasst ist. Zudem ist der Außendurchmesser des Befestigungsrings 52 derart ausgelegt, dass der Befestigungsring 52 in die zylindrische Aussparung 34 eingepresst werden kann. Diese Presspassung zwischen zylindrischer Aussparung 34 und Befestigungsring 52 erzeugt eine kraftschlüssige Verbindung, sodass der Mitschlepper 50 und das Verstellelement 30 verlässlich miteinander verbunden sind. Zur Unterstützung dieser Verbindung weist der Befestigungsring 52 eine radial außen liegende Wulst 51 auf, die in ihrem äußeren Querschnitt größer ausgebildet ist als der Innendurchmesser der zylindrischen Aussparung 34. Zudem ist der Befestigungsring 52 an seinem der Wulst 51 abgewandten Ende radial nach innen abgeschrägt ausgebildet, sodass diese Schrägen eine Einführhilfe beim Einsetzen des Befestigungsrings in die hohlzylindrische Aussparung 34 bilden.

Wie anhand von Figur 6 zu erkennen ist, ist radial innerhalb des Befestigungsrings 52 ein Ring 54 federnd angeordnet. Die federnde Lagerung wird mithilfe von Stegen 56 realisiert, über die der Ring 54 mit dem Befestigungsring 52 verbunden ist. Mindestens zwei Stege 56 sind erforderlich, um den federnd angeordneten Ring 54 innerhalb des Befestigungsring 52 verlässlich zu halten. Die Stege 56 sind in ihrer Dicke derart ausgebildet, dass der Ring 54 in axialer Richtung seine Position verändern kann. Beispielsweise drückt die noch nicht in den federnden Ring 54 eingeschraubte Befestigungsschraube 70 den federnden Ring 54 in axialer Richtung in die passende axiale Position, so dass die Befestigungsschraube 70 in das Mitnehmergewinde 58 einlaufen kann. Gemäß einer weiteren Ausgestaltung ist die Befestigungsschraube 70 in den federnd angeordneten Ring 54 eingeschraubt. Um in das Innengewinde 16 des Haltelements 10 einlaufen zu können, versetzt die Befestigungsschraube 70 den federnd angeordneten Ring 54 in axialer Richtung. Dies kann sowohl auf das Innengewinde 16 zu wie von diesem weg erfolgen. Nachfolgend läuft die Befestigungsschraube 70 passend in das Innengewinde 16 des Halteelements 10 ein.

Es ist ebenfalls bevorzugt, mehr als zwei Stege 56 zur Verbindung des federnd angeordneten Rings 54 mit dem Befestigungsring 52 vorzusehen. Die Stege 56 sind in Figur 7 veranschaulicht, die eine Teilschnittdarstellung entlang der Linie B-B in Figur 6 zeigt.

Gemäß einer bevorzugten Ausführungsform weist der federnd angeordnete Ring 54 an seiner radialen Innenseite ein Gewinde 58 auf, dass an das Außengewinde der Befestigungsschraube 70 angepasst ist. Das Gewinde 58 des federnd angeordneten Rings 54 umfasst nur einen Gewindegang 58, der sich über einen Winkel von maximal 360° erstreckt. Vorzugsweise ist der Gewindegang 58 über einen kleineren Winkel von beispielsweise 0°-270° und weiter bevorzugt von 0°-180° ausgebildet. Dieser Gewindegang 58 gewährleistet, dass die Befestigungsschraube 70 reibungslos in den Mitschlepper 50 einläuft. Sollte die axiale Position des Gewindegangs 58 des federnd angeordneten Rings 54 nicht passend zum Gewinde der Befestigungsschraube 70 ausgerichtet sein, drückt die Befestigungsschraube 70 selbstständig den federnd angeordneten Ring 54 in die passende axiale Position, sodass der Gewindegang 58 in das Gewinde der Befestigungsschraube 70 einlaufen kann. Aufgrund dessen, dass der Gewindegang 58 in seiner Form an das Gewinde der Befestigungsschraube 70 angepasst ist, wird eine formschlüssige Verbindung zwischen dem federnd angeordneten Ring 54, somit mit dem Mitschlepper 50, und der Befestigungsschraube 70 gebildet. Diese formschlüssige Verbindung gewährleistet, dass das auf die Befestigungsschraube 70 übertragende Drehmoment ebenfalls auf den Mitschlepper 50 und somit auf das Verstellelement 30 übertragen wird. Durch die Drehmomentübertragung ist das Verstellelement 30 vom Halteelement 10 abschraubbar, bis der Abstand S zwischen dem ersten Bauteil B1 und dem zweiten Bauteil B2 ausgeglichen ist.

Im Endbereich des Gewindegangs 58 weist die radiale Innenseite des federnd angeordneten Rings 54 vorzugsweise einen Nocken 60 auf, der radial nach innen ragt. Der Nocken 60 stellt sicher, dass die Befestigungsschraube 70 nur bis zum Nocken 60 in den Gewindegang 58 einschraubbar ist. Solange die Befestigungsschraube 70 nicht ein Schwellenwert-Drehmoment relativ zum Mitschlepper 50 übersteigt, wirkt der Nocken 60 als Mitnehmergewindeblockade. Daraus folgt, dass der Mitschlepper 50 und somit auch das Verstellelement 30 von der Befestigungsschraube 70 mitgedreht werden. Als Mitnehmergewindeblockade 60 ist jede Konstruktion nutzbar, die ein weiteres Eindrehen der Befestigungsschraube 70 in den Gewindegang 58 verhindert. Daher könnte beispielsweise auch ein in axialer Richtung des federnd angeordneten Rings 54 verlaufender Steg den Gewindegang 58 blockieren, damit der Mitschlepper 50 durch die Befestigungsschraube 70 mitgedreht wird. Eine weitere Ausführungsform der Mitnehmergewindeblockade 60 besteht aus einem federnd angeordneten Steg (nicht gezeigt), der radial ins Innere des federnden Rings 54 ragt. Bevorzugt ist dieser radiale Steg in tangentialer Richtung in Drehrichtung der Befestigungsschraube 70 geneigt. Wird der radiale Steg mit dem Schwellenwert-Drehmoment belastet, federt er radial nach außen, um den Gewindegang 58 freizugeben. Nach dem Entfernen der Befestigungsschraube 70 federt er radial nach innen, um wieder die Mitnehmergewindeblockade 60 zu bilden. Somit muss der Mitschlepper 50 bei erneutem Einsatz nicht ausgetauscht werden.

In diesem Zusammenhang ist es ebenfalls bevorzugt, den Nocken 60 derart auszubilden, dass er durch die Befestigungsschraube 70 reversibel radial auswärts versetzt wird. Zu diesem Zweck ist der Ring 54 verformbar und in seinem Innendurchmesser größer als der Nenndurchmesser des Gewindes der Befestigungsschraube 70 ausgebildet. Drückt die Befestigungsschraube 70 bei Überwinden des Schwellenwert-Drehmoments oder beim Abstützen des Verstellelements 30 am zweiten Bauteil B2 den Nocken 60 radial auswärts, wird der Ring 54 aus seiner runden in eine ovale Form verformt. Diese Verformung ist derart, dass der Nocken 60 das Innere des Rings 54 frei gibt und die Befestigungsschraube 70 in das Mitnehmergewinde 58 weiter eingeschraubt werden kann.

Es ist ebenfalls bevorzugt, den Nocken 60 radial auswärts durch die Befestigungsschraube 70 irreversibel zu verformen, wenn die Befestigungsschraube 70 das Schwellenwert-Drehmoment bezogen auf den Mitschlepper 50 überwindet. In diesem Fall quetscht die Befestigungsschraube 70 den Nocken 60 radial auswärts, wobei der Nocken 60 das Innere des Rings 54 frei gibt, aber nicht vom Mitschlepper 50 getrennt wird.

Gemäß einer weiteren bevorzugten Ausgestaltung vorliegender Erfindung sind das Mitnehmergewinde 58 und die Mitnehmergewindeblockade 60 gemeinsam in einem Untermaßgewinde im Vergleich zum Gewinde der Befestigungsschraube 70 realisiert. Da das Untermaßgewinde nicht passend zum Gewinde der Befestigungsschraube 70, im Speziellen mit geringerem Nenndurchmesser als dem Nenndurchmesser der Befestigungsschraube 70, ausgebildet ist, bleibt die Befestigungsschraube 70 beim Eindrehen in das Untermaßgewinde stecken und dreht das Verstellelement 30 über den Mitschlepper 50 mit.

Sobald die Befestigungsschraube 70 das Verstellelement 30 über den Mitschlepper 50 soweit mitgedreht hat, dass der Abstand S zwischen dem ersten Bauteil B1 und dem zweiten Bauteil B2 ausgeglichen ist, legt sich das Verstellelement 30 mit seiner dem Mitschlepper 50 zugewandten Stirnseite am zweiten Bauteil B2 an. Dadurch ist ein weiteres Verdrehen des Verstellelements 30 verhindert, sodass sich bei einem weiteren Drehen der Befestigungsschraube 70 das Drehmoment zwischen Mitnehmergewindeblockade 60 und Befestigungsschraube 70 erhöht. Sobald dieses Drehmoment das bereits oben genannte Schwellenwert-Drehmoment übersteigt, wird die Befestigungsschraube 70 über die Mitnehmergewindeblockade 60 hinaus in die Befestigungseinrichtung eingeschraubt. Sobald die Befestigungsschraube 70 im Innengewinde 16 des Halteelements 10 festgeschraubt oder mit einer Mutter (nicht gezeigt) verbunden worden ist, liegt eine feste Verbindung zwischen dem ersten Bauteil B1 und dem zweiten Bauteil B2 über die Befestigungseinrichtung vor (vgl. Figuren 10 und 11).

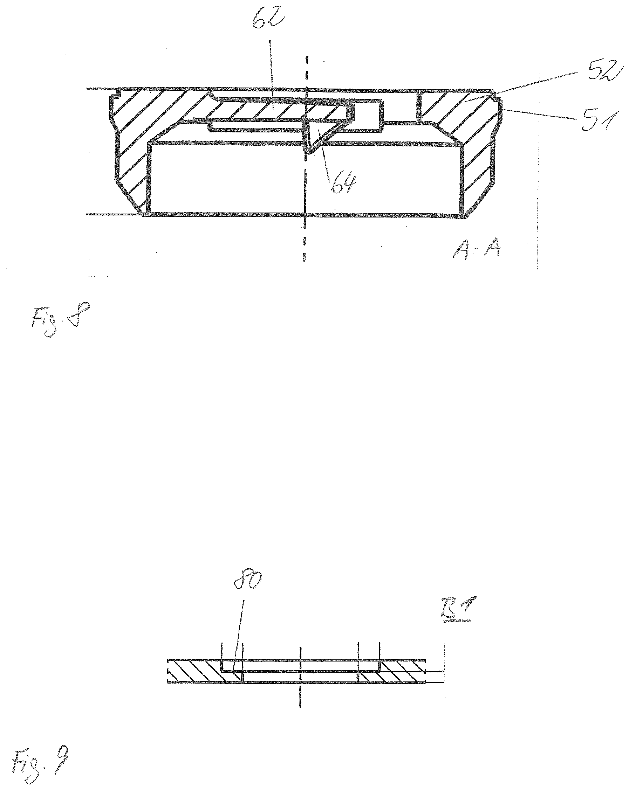

Figur 8 zeigt eine Schnittdarstellung entlang der Linie A-A aus Figur 6. Darin ist der in umfänglicher Richtung verlaufende kreisbogenförmige federnde Steg 62 aus Figur 6 zu erkennen, der mit einem Ende am Befestigungsring 52 befestigt ist und an seinem anderen Ende eine Rastnase 64 aufweist. Die Rastnase 64 ist somit in axialer Richtung federnd ausgebildet. Sie wirkt mit der mindestens einen Rastvertiefung 26 (vgl. Figur 5) an der axial äußeren Stirnseite des Halteelements 10 zusammen. Wird das Verstellelement 30 mit dem eingepressten Mitschlepper 50 auf das Haltelement 10 aufgedreht, verriegelt sich die Rastnase 64 des Mitschleppers in einer der vorzugsweise drei Rastvertiefungen 26 des Halteelements 10. Aufgrund dieser Verriegelung ist das Verstellelement 30 gegen Verkontern mit dem Halteelement 10 geschützt. Zudem liefert die Verriegelung zwischen Rastnase 64 und Rastvertiefung 56 eine Transportsicherung gegen ein selbstständiges Lösen des Verstellelements 30 vom Haltelement 10.

Gemäß der in Figur 5 gezeigten bevorzugten Ausführungsform ist die Rastnase 64 an dem federnden Steg 62 angeordnet und wirkt mit den Rastvertiefungen 56 an der axial außen liegenden Stirnseite des Halteelements 10 zusammen. Es ist ebenfalls bevorzugt, die Rastnase 64 an der dem Verstellelement 30 zugewandten axialen Stirnseite des federnd angeordneten Rings 54 anzuordnen (nicht gezeigt). Um eine Rastverbindung mit der Rastnase 64 herzustellen, werden dann die mindestens eine Rastvertiefung 26 an der axial innen liegenden Stirnseite 24 des Halteelements 10 vorgesehen. Da der federnd angeordnete Ring 54 mit Rastnase 64 (nicht gezeigt) in axialer Richtung federnd bzw. versetzbar angeordnet ist, ist das Verstellelement 30 über den federnd angeordneten Ring 54 an dem Halteelement 10 lösbar verriegelbar. Diese Verriegelung würde in gleicher Weise sowohl eine Sicherung gegen Verkontern wie auch eine Transportsicherung bereitstellen. Sobald die Befestigungsschraube 70 in die Befestigungseinrichtung eingeschraubt wird, wird der federnd angeordnete Ring 54 durch einen Druck in axialer Richtung der Befestigungsschraube 70 aus der Verrastung zwischen Rastnase 64 und Rastvertiefung 26 gelöst, da er in axialer Richtung vom Halteelement 10 weg federt. Nach Lösen der Verriegelung kann über die bereits oben beschriebene Weise die Befestigungsschraube 70 das Verstellelement 30 mitdrehen, um den Abstand S zwischen dem ersten Bauteil B1 und dem zweiten Bauteil B2 auszugleichen.

Figur 9 zeigt in vergrößerter Darstellung einen Schnitt durch das erste Bauteil B1. Dieses erste Bauteil B1 weist eine Öffnung in Form einer Schiene oder einer abgesenkten Bohrung auf, sodass sich der Nietkragen 20 (vgl. Figuren 1, 10 und 11) an den Absätzen dieser Öffnung verriegeln kann. Zu diesem Zweck wird der Nietkragen 20 mit dem bereits oben erwähnten Verfahren des Taumelnietens umgelegt, sodass das Bauteil B1 zwischen dem Flansch 12 und dem umgelegten Kragen 20 gehalten wird.

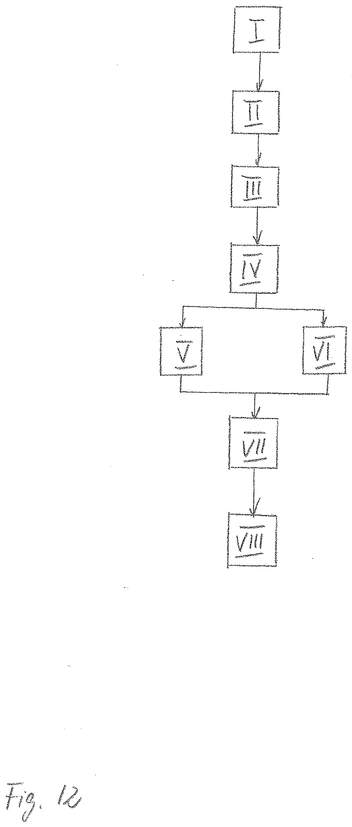

Figur 12 zeigt ein Flussdiagramm einer bevorzugten Ausführungsform des Installationsverfahrens der Befestigungseinrichtung. Es umfasst die-folgenden Schritte. Zunächst wird das Halteelement 10 am ersten Bauteil B1 befestigt (Schritt I). Vorzugsweise wird dazu in einer Öffnung oder einer Schiene 80 des ersten Bauteils B1 der Nietkragen 20 umgelegt. Gemäß einer Ausführungsform nutzt man dazu das Verfahren des Taumelnietens. Es sind aber auch andere Verfahren anwendbar, die das Halteelement 10 auch ohne Nietkragen 20 in der Öffnung des ersten Bauteils B1 festlegen. Dies erfolgt beispielsweise durch Verschrauben oder Verkleben oder ein anderes Nietverfahren.

Das Halteelement 10 wird als vormontierte Einheit, d.h. mit aufgeschraubtem, vorzugsweise verriegeltem, Verstellelement 30 am ersten Bauteil B1 befestigt. Nachfolgend wird die Befestigungsschraube 70 durch eine Öffnung im zweiten Bauteil B2 geführt und am federnden Ring 52 des Mitschleppers 50 angesetzt. Um ein Einlaufen der Befestigungsschraube 70 in das Mitnehmergewinde 58 der oben beschriebenen Ausführungsformen zu gewährleisten, wird der federnd angeordnete Ring 54 in axialer Richtung der Befestigungsschraube 70 positioniert (Schritt II). Die Befestigungsschraube 70 drückt den Ring 54 in die passende axiale Position, so dass die Befestigungsschraube 70 in das Mitnehmergewinde 58 mit überwindbarer Mitnehmergewindeblockade 60 einschraubbar ist. Danach erfolgt im Schritt III das Einschrauben der Befestigungsschraube 70 in das Mitnehmergewinde 58.

Durch weiteres Drehen der Befestigungsschraube 70 im Schritt IV wird das Verstellelement 30 über den Mitschlepper 50 ebenfalls gedreht und in axialer Richtung zum zweiten Bauteil B2 versetzt. Auf diese Weise wird der Abstand S zwischen dem ersten Bauteil B1 und dem zweiten Bauteil B2 ausgeglichen. Sobald das Verstellelement 30 am zweiten Bauteil B2 anliegt, steigt bei weiterer Drehung der Befestigungsschraube 70 das Drehmoment zwischen Befestigungsschraube 70 und Mitschlepper 50. Sobald das Schwellenwert-Drehmoment erreicht ist, überwindet die Befestigungsschraube 70 die Mitnehmerblockade 60, die entweder in Form eines Nockens 60, Stegs oder eines Untermaßgewindes (siehe oben) ausgebildet ist (Schritt V oder VI). Dabei wird durch die Befestigungsschraube 70 der radial einwärts ragende Nocken 60 radial auswärts irreversibel verformt (Schritt V) oder reversibel radial auswärts gedrückt (Schritt VI, siehe oben). Gemäß einer weiteren Alternative wird der in axialer Richtung verlaufende Steg radial auswärts versetzt oder die Befestigungsschraube 70 in das Untermaßgewinde eingeschraubt.

Bevor die Befestigungsschraube 70 in das Innengewinde 16 des Halteelements 30 eingeschraubt wird, erfolgt im Schritt VII ein erneutes axiales Positionieren des federnd angeordneten Rings 54 über die in ihn eingeschraubte Befestigungsschraube 70. Der Ring 54 wird derart axial versetzt, dass das Gewinde der Befestigungsschraube 70 in das Innengewinde 16 des Halteelements 10 einlaufen kann. Mit dem Einschrauben der Befestigungsschraube 70 in das Halteelement 10 ist das erste Bauteil B1 am zweiten Bauteil B2 befestigt. Es ist ebenfalls bevorzugt, die Befestigungsschraube 70 mit Hilfe einer Mutter am ersten Bautel B1 zu befestigen.

### Bezugszeichenliste

- 10: Halteelement
- 12: Flansch
- 14: zylindrische Aussparung
- 16: Innengewinde
- 18: Außengewinde
- 20: Nietkragen
- 22: axial äußere Stirnseite
- 24: axial innere Stirnseite
- 26: Rastvertiefung
- 30: Verstellelement
- 32: Innengewinde des Verstellelements
- 34: zylindrische Aussparung des Verstellelements
- 36: Antriebsmittel
- 50: Mitschlepper
- 51: radial äußere Befestigungswulst
- 52: Befestigungsring
- 54: federnd angeordneter Ring
- 56: federnder Steg
- 58: Gewindegang
- 60: Mitnehmergewindeblockade
- 62: Federam
- 64: Rastnase
- B1: erstes Bauteil
- B2: zweites Bauteil
- S: Abstand

## Patentansprüche

1. Befestigungseinrichtung zum Befestigen eines ersten Bauteils (B1) an einem zweiten Bauteil (B2) mit selbsttätigem Ausgleich von Toleranzen im Abstand (S) zwischen dem ersten Bauteil (B1) und dem zweiten Bauteil (B2), die die folgenden Merkmale aufweist:
a. ein Halteelement (10) und ein Verstellelement (30), die über ein Außengewinde (18) des Halteelements (10) und ein Innengewinde (32) des Verstellelements (30) in einer ersten Gewindepaarung mit einer ersten Gangrichtung miteinander verschraubbar sind, wobei
b. eine Befestigungsschraube (70) über eine zweite Gewindepaarung einer der ersten entgegengesetzten zweiten Gangrichtung in das Halteelement (10) einschraubbar und mit dem Verstellelement (30) über einen Mitschlepper (50) lösbar verbindbar ist, um beim Drehen der Befestigungsschraube (70) das Verstellelement (30) mitzudrehen und dadurch zwecks Toleranzausgleich in Anlage mit dem zweiten Bauteil (B2) zu bewegen, **dadurch gekennzeichnet, dass**
c. der Mitschlepper (50) einen in axialer Richtung des Verstellelements (30) federnd angeordneten Ring (54) mit einem Mitnehmergewinde (58) und einer überwindbaren Mitnehmergewindeblockade (60) aufweist.

2. Befestigungseinrichtung gemäß Anspruch 1, deren Mitnehmergewindeblockade in Kombination mit dem Mitnehmergewinde (58) als ein Untermaßgewinde im Vergleich zum Gewinde der Befestigungsschraube (70) ausgebildet ist, so dass ein Nenndurchmesser des Gewindes der Befestigungsschraube (70) größer ist als ein Nenndurchmesser des Mitnehmergewindes (58).

3. Befestigungseinrichtung gemäß Anspruch 1 oder 2, deren Mitschlepper (50) einen Befestigungsring (52) aufweist, der an dem Verstellelement (30) befestigbar , vorzugsweise einpressbar, ist.

4. Befestigungseinrichtung gemäß Anspruch 3, deren federnd angeordneter Ring (54) über mindestens zwei in radialer Richtung verlaufende Stege am Befestigungsring (52) angeordnet ist.

5. Befestigungseinrichtung gemäß Anspruch 1, deren Mitnehmergewinde (58) passend zum Gewinde der Befestigungsschraube (70) ausgebildet ist.

6. Befestigungseinrichtung gemäß Anspruch 1 oder einem der Ansprüche 3 bis 5, deren Mitnehmergewinde (58) maximal einen Gewindegang über einen Drehwinkel von maximal 360° aufweist.

7. Befestigungseinrichtung gemäß Anspruch 1 oder einem der Ansprüche 3 bis 6, deren Mitnehmergewindeblockade (60) aus einem radial einwärts ragenden Nocken (60) und/oder einem axial verlaufenden Steg besteht, der/die deformierbar und nahe des Ausgangs des Mitnehmergewindes (58) angeordnet ist/sind.

8. Befestigungseinrichtung gemäß einem der vorhergehenden Ansprüche, deren Halteelement (10) an einer dem Mitschlepper (50) zugewandten Stirnseite (22) mindestens eine Rastvertiefung (26) aufweist, so dass darin das Verstellelement (30) gegen Verdrehung lösbar verriegelbar ist über einen kreisbogenförmig verlaufenden Federarm (62) mit Rastnase (64) des Befestigungsrings (52) oder eine axiale Rastnase des federnd angeordneten Rings (54).

9. Befestigungseinrichtung gemäß einem der vorhergehenden Ansprüche, deren Halteelement (10) einen Nietkragen (20) aufweist, mit dem das Halteelement (10) in einer Schiene (80) des ersten Bauteils (B1) befestigbar ist.

10. Befestigungseinrichtung gemäß einem der Ansprüche 1-9, die die Befestigungsschraube (70) umfasst.

11. Bauteil mit installierter Befestigungseinrichtung gemäß einem der Ansprüche 1-10.

12. Installationsverfahren einer Befestigungseinrichtung zwischen einem ersten Bauteil (B1) und einem zweiten Bauteil (B2) mit selbsttätigem Ausgleich von Toleranzen im Abstand (S) zwischen dem ersten Bauteil (B1) und dem zweiten Bauteil (B2), bei dem die Befestigungseinrichtung ein Halteelement (10), ein Verstellelement (30), eine Befestigungsschraube (70) und einen Mitschlepper (50) mit einem in axialer Richtung des Verstellelements (30) federnd angeordneten Ring (54) mit einem Mitnehmergewinde (58) und einer überwindbaren Mitnehmergewindeblockade (60) aufweist und das die folgenden Schritte umfasst:
a. Befestigen (I) des Halteelements (10) am ersten Bauteil (B1), wobei das Verstellelement (30) auf dem Verstellelement (30) vormontiert ist,
b. axiales Positionieren (II, VII) des federnd angeordneten Rings (54) mit Hilfe der Befestigungsschraube (70), so dass die Befestigungsschraube (70) in das Mitnehmergewinde (58) mit überwindbarer Mitnehmergewindeblockade (60) und/oder ein Innengewinde (16) des Halteelements (10) einschraubbar ist,
c. Einschrauben (III) der Befestigungsschraube (70) in das Mitnehmergewinde (58),
d. Drehen (IV) des Verstellelements (30) über den Mitschlepper (50) mit der Befestigungsschraube (70), bis der Abstand (S) zwischen dem ersten Bauteil (B1) und dem zweiten Bauteil (B2) ausgeglichen ist, und
e. Überwinden (V, VI) der Mitnehmergewindeblockade (60) durch Drehen der Befestigungsschraube (70) und Einschrauben (VIII) der Befestigungsschraube (70) in das Halteelement (10) oder eine Mutter, so dass das erste Bauteil (B1) am zweiten Bauteil (B2) befestigt ist.

13. Installationsverfahren gemäß Anspruch 12, wobei beim Überwinden der Mitnehmergewindeblockade (60) die Befestigungsschraube (70) einen radial einwärts ragenden Nocken (60) oder einen in axialer Richtung verlaufenden Steg radial auswärts versetzt.

14. Installationsverfahren gemäß Anspruch 13, wobei der radial einwärts ragende Nocken (60) durch die Befestigungsschraube (70) radial auswärts irreversibel verformt (V) oder reversibel radial auswärts gedrückt wird (V1).

## Claims

1. Fastening device for fastening a first component (B1) to a second component (B2), with automatic tolerance compensation in the distance (S) between the first component (B1) and the second component (B2), which comprises the following features:
a. a holding element (10) and an adjusting element (30) which can be screwed together via an outer thread (18) of the holding element (10) and an inner thread (32) of the adjusting element (30), in a first thread pairing with a first thread direction; wherein
b. a fastening screw (70) can be screwed into said holding element (10) via a second thread pairing in a second thread direction which is opposite to the first thread direction, and can be releasably connected to the adjusting element (30) via a carrying element (50), such that when the fastening screw (70) is rotated the adjusting element (30) is rotated along with it, and thereby, for the purpose of adjusting for tolerances, is moved into abutment with the second component (B2), **characterized in that**
c. said carrying element (50) has a ring (54) which is arranged in a spring-loaded manner in the axial direction of the adjusting element (30) comprising a carrying element thread (58) and an overcomeable carrying element thread blocking means (60).

2. Fastening device according to claim 1, the carrying element thread blocking means of which, in combination with the carrying element thread (58), is in the form of an undersized thread in comparison to the thread of the fastening screw (70), so that a nominal diameter of the thread of the fastening screw (70) is greater than a nominal diameter of the carrying element thread (58).

3. Fastening device according to claim 1 or 2, the carrying element (50) of which has a fastening ring (52) which is fastenable to, preferably pressable into, the adjusting element (30).

4. Fastening device according to claim 3, the spring-loaded ring (54) of which is disposed on the fastening ring (52) via at least two projections extending in the radial direction.

5. Fastening device according to claim 1, the carrying element thread (58) of which is formed to match the thread of the fastening screw (70).

6. Fastening device according to claim 1 or one of the claims 3 to 5, the carrying element thread (58) of which has a maximum of one thread turn over an angle of rotation of at most 360°.

7. Fastening device according to claim 1 or one of the claims 3 to 6, the carrying element thread blocking means (60) of which consists of a radially inwardly projecting detent (60) and/or an axially extending projection, which is/are deformable and disposed near the outlet of the carrying element thread (58).

8. Fastening device according to one of the preceding claims, the holding element (10) of which has, on an end side (22) directed toward the carrying element (50), at least one latch recess (26), so that therein, the adjusting element (30) is releasably latchable against rotation, via a spring arm (62) extending circular arcuately having a latch projection (64) of the fastening ring (52) or an axial latch projection of the spring-loaded ring (54).

9. Fastening device according to one of the preceding claims, the holding element (10) of which has a rivet collar (20), with which the holding element (10) is joinable in a guide (80) of the first component (B1).

10. Fastening device according to one of the claims 1 to 9, which comprises the fastening screw (70).

11. Component with an installed fastening device according to one of the claims 1 to 10.

12. Installation method of a fastening device between a first component (B1) and a second component (B2) with automatic tolerance compensation in the distance (S) between the first component (B1) and the second component (B2), in which the fastening device has a holding element (10), an adjusting element (30), a fastening screw (70), and a carrying element (50) with a ring (54) being spring-loaded in the axial direction of the adjusting element (30) having a carrying element thread (58) and an overcomeable carrying element thread blocking means (60), which comprises the following steps:
a. fastening (I) the holding element (10) to the first component (B1), wherein the adjusting element (30) is pre-mounted on the adjusting element (30),
b. axially positioning (II, VII) the spring-loaded ring (54) by means of the fastening screw (70), so that the fastening screw (70) can be screwed into the carrying element thread (58) with said overcomeable carrying element thread blocking means (60), and/or can be screwed into an inner thread (16) of the holding element (10),
c. screwing (III) the fastening screw (70) into the carrying element thread (58),
d. rotating (IV) the adjusting element (30) via the carrying element (50) along with the fastening screw (70), until the distance (S) between the first component (B1) and the second component (B2) is adjusted, and
e. overcoming (V, VI) the carrying element thread blocking means (60) by rotating the fastening screw (70), and screwing in (VIII) the fastening screw (70) into the holding element (10) or a nut, so that the first component (B1) is fastened to the second component (B2).

13. Installation method according to claim 12, wherein, when the carrying element thread blocking means (60) is overcome, the fastening screw (70) radially outwardly displaces a radially inwardly projecting detent (60) or an axially extending projection.

14. Installation method according to claim 13, wherein the radially inwardly projecting detent (60) is radially outwardly irreversibly deformed (V) by the fastening screw (70) or it is radially outwardly reversibly pressed (VI).

## Revendications

1. Dispositif de fixation destiné à fixer une première pièce (B1) à une deuxième pièce (B2) avec une égalisation automatique de tolérances dans la distance (S) entre la première pièce (B1) et la deuxième pièce (B2), présentant les caractéristiques suivantes :
a. un élément de maintien (10) et un élément de réglage (30), lesquels peuvent être vissés ensemble dans un premier accouplement de filetages avec une première direction de pas, par l'intermédiaire d'un filetage extérieur (18) de l'élément de maintien (10) et d'un filetage intérieur (32) de l'élément de réglage (30), dans lequel
b. une vis de fixation (70) peut être vissée dans l'élément de maintien (10) par un deuxième accouplement de filetages d'une deuxième direction de pas opposée à la première, et peut être reliée de façon détachable à l'élément de réglage (30) par l'intermédiaire d'un entraîneur (50), pour faire tourner conjointement l'élément de réglage (30) lors de la rotation de la vis de fixation (70) et ainsi déplacer celui-ci en contact avec la deuxième pièce (B2) afin d'égaliser les tolérances, **caractérisé en ce que**
c. l'entraîneur (50) présente un anneau (54) disposé élastiquement dans la direction axiale de l'élément de réglage (30), avec un filetage d'entraînement (58) et un blocage de filetage d'entraînement (60) susceptible d'être franchi.

2. Dispositif de fixation selon la revendication 1, dont le blocage de filetage d'entraînement en combinaison avec le filetage d'entraînement (58) est conçu comme un filetage de dimension inférieure en comparaison avec le filetage de la vis de fixation (70), de sorte qu'un diamètre nominal du filetage de la vis de fixation (70) est supérieur à un diamètre nominal du filetage d'entraînement (58).

3. Dispositif de fixation selon la revendication 1 ou 2, dont l'entraîneur (50) présente un anneau de fixation (52) susceptible d'être fixé à l'élément de réglage (30), de préférence susceptible d'être pressé dans celui-ci.

4. Dispositif de fixation selon la revendication 3, dont l'anneau disposé élastiquement (54) est disposé sur l'anneau de fixation (52) par l'intermédiaire d'au moins deux nervures s'étendant dans la direction radiale.

5. Dispositif de fixation selon la revendication 1, dont le filetage d'entraînement (58) est conçu de manière à correspondre au filetage de la vis de fixation (70).

6. Dispositif de fixation selon la revendication 1 ou l'une des revendications 3 à 5, dont le filetage d'entraînement (58) présente au maximum un pas de filetage sur un angle de rotation de 360° maximum.

7. Dispositif de fixation selon la revendication 1 ou l'une des revendications 3 à 6, dont le blocage de filetage d'entraînement (60) est constitué d'une came faisant saillie radialement vers l'intérieur (60) et/ou d'une nervure s'étendant axialement, laquelle/lesquelles est/sont déformable(s) et disposée(s) à proximité de la sortie du filetage d'entraînement (58).

8. Dispositif de fixation selon l'une des revendications précédentes, dont l'élément de maintien (10) présente au moins une cavité d'encliquetage (26) sur un côté frontal (22) tourné vers l'entraîneur (50), de sorte que l'élément de réglage (30) peut être verrouillé dans celle-ci de façon détachable contre la rotation, par l'intermédiaire d'un bras élastique (62) s'étendant en arc de cercle avec un nez d'encliquetage (64) de l'anneau de fixation (52) ou d'un nez d'encliquetage axial de l'anneau disposé élastiquement (54).

9. Dispositif de fixation selon l'une des revendications précédentes, dont l'élément de maintien (10) présente un col riveté (20) permettant de fixer l'élément de maintien (10) dans un rail (80) de la première pièce (B1).

10. Dispositif de fixation selon l'une des revendications 1 à 9, lequel comporte la vis de fixation (70).

11. Pièce avec un dispositif de fixation selon l'une des revendications 1 à 10 installé.

12. Procédé d'installation d'un dispositif de fixation entre une première pièce (B1) et une deuxième pièce (B2) avec égalisation automatique de tolérances dans la distance (S) entre la première pièce (B1) et la deuxième pièce (B2), dans lequel le dispositif de fixation présente un élément de maintien (10), un élément de réglage (30), une vis de fixation (70) et un entraîneur (50), avec un anneau (54) disposé élastiquement dans la direction axiale de l'élément de réglage (30), avec un filetage d'entraînement (58) et un blocage de filetage d'entraînement (60) susceptible d'être franchi, et lequel comporte les étapes suivantes :
a. fixation (1) de l'élément de maintien (10) à la première pièce (B1), l'élément de réglage (30) étant monté préalablement sur l'élément de réglage (30),
b. positionnement axial (II, VII) de l'anneau disposé élastiquement (54) à l'aide de la vis de fixation (70), de sorte que la vis de fixation (70) peut être visée dans le filetage d'entraînement (58) avec le blocage de filetage d'entraînement (60) susceptible d'être franchi et/ou dans un filetage intérieur (16) de l'élément de maintien (10),
c. vissage (III) de la vis de fixation (70) dans le filetage d'entraînement (58),
d. rotation (IV) de l'élément de réglage (30) par l'intermédiaire de l'entraîneur (50) avec la vis de fixation (70), jusqu'à ce que la distance (S) entre la première pièce (B1) et la deuxième pièce (B2) soit égalisée, et
e. franchissement (V, VI) du blocage de filetage d'entraînement (60) par rotation de la vis de fixation (70) et vissage (VIII) de la vis de fixation (70) dans l'élément de maintien (10) ou dans un écrou, de manière à fixer la première pièce (B1) à la deuxième pièce (B2) .

13. Procédé d'installation selon la revendication 12, dans lequel, lors du franchissement du blocage de filetage d'entraînement (60), la vis de fixation (70) déplace radialement vers l'extérieur un ergot faisant saillie radialement vers l'intérieur (60) ou une nervure s'étendant dans la direction axiale.

14. Procédé d'installation selon la revendication 13, dans lequel l'ergot faisant saillie radialement vers l'intérieur (60) est déformé de manière irréversible radialement vers l'extérieur (V) ou pressé de façon réversible radialement vers l'extérieur (VI) par la vis de fixation (70).
